(19) Europäisches Patentamt
European Patent Office
Office européen des brevets

(11) **EP 4 159 310 A1**

(12) **EUROPEAN PATENT APPLICATION**

(43) Date of publication:
**05.04.2023 Bulletin 2023/14**

(21) Application number: **21200470.9**

(22) Date of filing: **01.10.2021**

(51) International Patent Classification (IPC):
**B01J 23/10** (2006.01)  **B01D 53/94** (2006.01)
**B01J 37/03** (2006.01)

(52) Cooperative Patent Classification (CPC):
**B01J 23/10; B01D 53/944; B01J 37/03;**
B01D 2255/2065; B01D 2255/2066;
B01D 2255/20761; B01D 2255/2094;
B01D 2255/2096; B01D 2255/40; B01D 2255/65;
B01D 2255/9155; B01D 2258/01

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **UMICORE AG & Co. KG
63457 Hanau-Wolfgang (DE)**

(72) Inventors:
• **FERNANDEZ-ARROYO, Alberto
2000 Antwerpen (BE)**
• **VAN GENECHTEN, Dirk
3582 Koersel (BE)**
• **SCHOENHABER, Jan
64287 Darmstadt (DE)**
• **COLOMBO, Massimo
60314 Frankfurt am Main (DE)**

(54) **CATALYTIC COATING**

(57) The present invention is directed towards a catalytic coating comprising a composite oxide which accelerates soot combustion. The oxide is used in a catalytic coating in soot filters for the abatement of noxious pollutants in exhaust gases from combustion processes. A process for the production of catalytic coatings comprising these composite oxides is also given.

Fig. 1:

EP 4 159 310 A1

**Description**

The present invention is directed towards a catalytic coating comprising a composite oxide which accelerates soot combustion. The oxide is used in a catalytic coating in soot filters for the abatement of noxious pollutants in exhaust gases from combustion processes. A process for the production of catalytic coatings comprising these composite oxides is also given.

The exhaust gas of internal combustion engines in motor vehicles typically contains the harmful gases carbon monoxide (CO) and hydrocarbons (HC), nitrogen oxides ($NO_x$), and possibly sulfur oxides ($SO_x$), as well as particulates that mostly consist of solid carbon-containing particles and possibly adherent organic agglomerates called soot. All of these are named primary emissions. CO, HC, and particulates are the products of the incomplete combustion of the fuel inside the combustion chamber of the engine. Nitrogen oxides are formed in the cylinder from nitrogen and oxygen in the intake air when combustion temperatures exceed 1200°C. Sulfur oxides result from the combustion of organic sulfur compounds, small amounts of which are always present in non-synthetic fuels. Compliance in the future with statutory exhaust emission limits for motor vehicles applicable in Europe, China, North America, and India requires the extensive removal of said harmful substances from the exhaust gas. For the removal of these emissions, which are harmful to health and environment, from the exhaust gases of motor vehicles, a variety of catalytic technologies for the purification of exhaust gases have been developed, the fundamental principle of which is usually based upon guiding the exhaust gas that needs purification over a flow-through or wall-flow honeycomb body with a catalytically active coating comprising noble metals as catalytic components applied thereto. The catalytic converter facilitates the chemical reaction of different exhaust gas components, while forming non-hazardous products, such as carbon dioxide, water, and nitrogen.

The flow-through or wall-flow honeycomb bodies just described are also called catalyst supports, carriers, or substrate monoliths, as they carry the catalytically active coating on their surface or in the walls forming this surface. The catalytically active coating is often applied to the catalyst support in the form of a suspension in a so-called coating operation. Many such processes have been published in the past by automotive exhaust-gas catalytic converter manufacturers (EP1064094B1, EP2521618B1, WO10015573A2, EP1136462B1, US6478874B1, US4609563A, WO9947260A1, JP5378659B2, EP2415522A1, JP2014205108A2).

The harmful gases carbon monoxide and hydrocarbons from a lean exhaust gas can easily be rendered harmless by oxidation on a suitable oxidation catalyst. In a stoichiometrically operated internal combustion engine, all three harmful gases (HC, CO, and $NO_x$) can be eliminated via a three-way catalytic converter.

The operating mode of the internal combustion engine is decisive for the respectively possible methods of harmful substance conversion in the catalytic converter in each case. Diesel engines are usually operated with excess air, most spark-ignition engines with a stoichiometric mixture of intake air and fuel. Stoichiometrically means that on average exactly as much air is available for combustion of the fuel present in the cylinder as is required for complete combustion. The combustion air ratio $\lambda$ (A/F ratio; air/fuel ratio) sets the air mass $m_{L,actual}$, which is actually available for combustion in relation to the stoichiometric air mass $m_{L,st}$:

$$\lambda = \frac{m_{L,actual}}{m_{L,st}}$$

If $\lambda < 1$ (e.g., 0.9), this means "air deficiency" and one speaks of a rich exhaust gas mixture; $\lambda > 1$ (e.g., 1.1) means "excess air" and the exhaust gas mixture is referred to as lean. The statement $\lambda = 1.1$ means that 10% more air is present than would be required for the stoichiometric reaction.

When lean-burn motor vehicle engines are mentioned in the present text, reference is thereby made mainly to diesel engines and to predominantly on average lean-burn spark-ignition engines. The latter are gasoline engines predominantly operating on average with a lean A/F ratio (air/fuel ratio). In contrast, most gasoline engines are operated with an on-average stoichiometric combustion mixture. In this respect, the expression "on-average" takes into consideration the fact that modern gasoline engines are not statically operated with a fixed air/fuel ratio (A/F ratio; $\lambda$ value). It is rather the case that a mixture with a discontinuous course of the air ratio $\lambda$ around $\lambda = 1.0$ is predetermined by the engine control system, resulting in a periodic change of oxidizing and reducing exhaust gas conditions. This change in the air ratio $\lambda$ is significant for the exhaust gas purification result. To this end, the $\lambda$ value of the exhaust gas is regulated with a very short cycle time (approx. 0.5 to 5 Hz) and an amplitude $\Delta\lambda$ of $0.005 \leq \Delta\lambda \leq 0.07$ around the value $\lambda = 1.0$. On-average, the exhaust gas under such operating states should therefore be described as "on-average" stoichiometric. In order for these deviations to not have a negative effect on the result of exhaust gas purification when the exhaust gas flows over a three-way catalytic converter, the oxygen-storing materials contained in the three-way catalytic converter balance out these deviations by absorbing oxygen from the exhaust gas or releasing it into the exhaust gas as needed (Catalytic Air Pollution Control, Commercial Technology, R. Heck et al., 1995, p. 90). However, due to the dynamic mode of operation of the engine in the vehicle, further deviations from this state also occur at times. For example, under extreme acceleration or while coasting, the operating states of the engine, and thus of the exhaust gas, can be adjusted and can, during these states on-average, be hypostoichiometric or hyperstoichiometric. Nevertheless, these engines run predominantly (during the majority of operation time) on an on-average stoichiometric A/F-ratio. Lean-burn spark-ignition engines have an exhaust gas which is predominantly, i.e., for the majority of the duration of the combustion operation, combusted with an air/fuel ratio that is lean "on-average". The same applies for diesel engines.

As already said, in addition to gaseous pollutants, the exhaust gas from combustion engines also contains extremely fine particles (PM) resulting from the incomplete combustion of the fuel which essentially consist of soot. In contrast to the particle emission of diesel engines, the particles in the exhaust gas of stoichiometrically operated combustion engines, such as gasoline engines, are very small and have an average particle size of less than 1 $\mu$m. Typical particle sizes range from 10 to 200 nm. Furthermore, the amount of particles emitted is very low and ranges from 2 to 4 mg/km. The European exhaust emission standard EU-6c is associated with a conversion of the limit value for such particles from the particle mass limit value to a more critical particle number limit value of 6 x $10^{11}$/km (in the Worldwide Harmonized Light Vehicles Test Cycle - WLTP) and Euro-6d prescribes this limit also under real drive conditions. This creates a need for exhaust gas cleaning concepts also for stoichiometrically operated combustion engines, which include effectively operating equipment for removing particles.

Diesel particulate filters or gasoline particulate filters such as wall-flow filters with and without an additional catalytically active coating are suitable units for removing the particulate emissions. In order to meet the legal standards, it is desirable for current and future applications for the exhaust gas aftertreatment of internal combustion engines to combine particulate filters with other catalytically active functionalities not only for reasons of cost but also for installation space reasons. The use of a particulate filter, whether catalytically coated or not, leads to a noticeable increase in the exhaust-gas back pressure in comparison with a flow-through support of the same dimensions and thus to a reduction in the torque of the engine or possibly to increased fuel consumption. In order to not increase the exhaust-gas back pressure even further, the amounts of oxidic support materials for the catalytically active noble metals of the catalytic converter or oxidic catalyst materials are generally applied in smaller quantities in the case of a filter than in the case of a flow-through support. As a result, the catalytic effectiveness of a catalytically coated particulate filter is frequently inferior to that of a flow-through monolith of the same dimensions.

Wall-flow filters made of ceramic materials have proven themselves in the field of cleaning exhaust gases from combustion engines, i.e. in particular diesel engines. These are made up of a multiple number of parallel channels formed by porous walls. The channels are alternately sealed at one of the two ends of the filter so that channels A, which are open at the first side of the filter and sealed at the second side of the filter, and channels B, which are sealed at the first side of the filter and open at the second side of the filter, are formed. For example, exhaust gas flowing into channels A can only leave the filter via channels B and must flow-through the porous walls between channels A and B for this purpose. When the exhaust gas passes through the wall, the particles are retained, and the exhaust gas is cleaned.

The particles retained in this manner must then be burnt off or oxidized in order to prevent a clogging of the filter or an unacceptable increase in the back pressure of the exhaust system. For this purpose, the wall-flow filter is, for example, provided with catalytically active coatings that reduce the ignition temperature of soot.

Pt/Al$_2$O$_3$ and PtPd/Al$_2$O$_3$ catalysts are the state-of-the-art materials in catalyzed particle filter technologies to reduce the particulate matter emissions in both diesel- and gasoline-powered light-duty vehicles (cDPF and cGPF). These catalysts show high activity in soot oxidation reactions (especially in the presence of NO$_x$), although a heavy toll is always implied due to the presence of large amounts of expensive platinum group metals (PGM). In this sense, multiple PGM-free catalysts have been investigated in the last decades as an alternative to reduce costs, while maintaining performance. Ceria-based materials have led to continuous progress on this matter, although additional upgrading is needed to overcome their thermal stability limitations. CePrO$_x$ has been found to be a candidate for low temperature soot combustion (N. Guillén-Hurtado et al., Applied Catalysis A, General 590 (2020) 117339). Therefore, low cost and stable PGM-free catalysts should be developed that are also optimized for improved catalyst-soot contact, and hence their soot oxidation activity.

There is still a need for catalytically active coatings for particulate filters that accelerate soot combustion, in particular for filters that are positioned in a cooler region of the exhaust train, e.g. in the underfloor of a vehicle. Such particulate filters should have as high a degree of conversion as possible for soot particles, especially also after aging, in order to safeguard the imposed legal requirements. At the same time, the filter should have as low a dynamic back pressure as possible, so that the engine power is maintained, and the lowest possible fuel consumption can be realized.

By providing a catalytic coating on the inlet channels of a wall-flow filter for the combustion of soot comprising a composite oxide according to the formula:

$$Pr_{2-x}A_xCe_{2-y}B_yO_z$$

in which

A is an alkaline earth metal, an alkaline metal or a transition metal;

B is a transition metal different from A; and

x and y take - independently from each other - values from 0 - 1, more preferably 0,05 - 0,5, wherein x and/or y > 0; and

z has a value that serves for electroneutrality of the composite oxide,

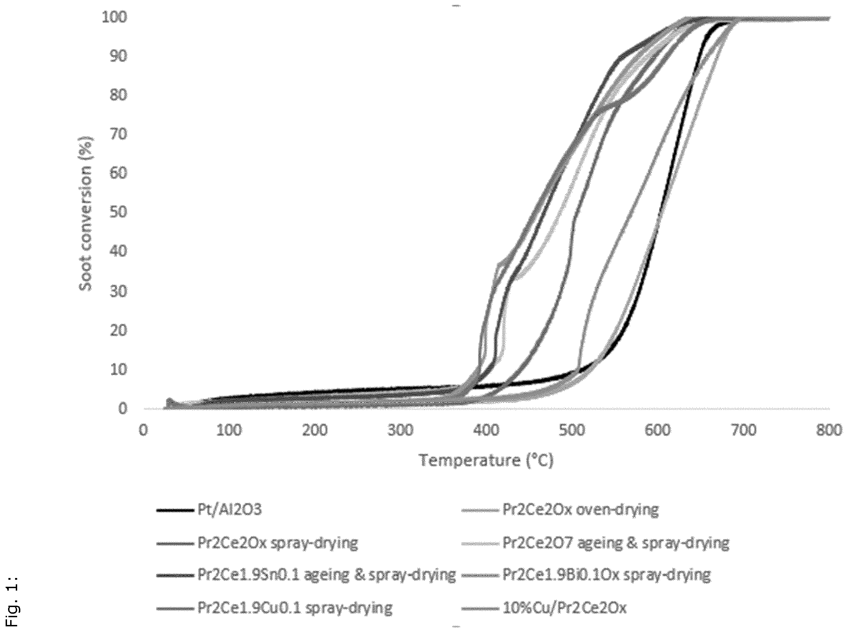

the artisan arrives at the solution to above mentioned objectives. The composite oxide mentioned above is able to reduce the temperature at which soot can be burned within a wall-flow filter to a considerable extent. So, it becomes possible, e.g. in comparison to the regularly used Pt-based soot oxidation catalyst, to obtain a more than 100°C benefit in $T_{50}$ (temperature when 50% soot has been converted/burnt) when oxidizing soot even after a harsh aging of the catalytic coatings used (Fig. 1).

The skilled worker knows what a catalytic coating is and how to manufacture it. The term "coating" is to be understood to mean the application of catalytically active materials to - in this case - a wall-flow filter. The coating assumes the actual catalytic function. In the present case, the coating is carried out by applying a correspondingly low-viscosity aqueous suspension of the catalytically active components, also referred to as a washcoat, into or onto the inlet channel walls of the wall-flow filter, e.g. in a manner described in the introduction. The term "onto" refers to an on-wall coating which has less than 20 wt.-% of the coating amount within the pores of the porous filter walls. The term "into" on the other hand refers to a coating which resides to more than 80 wt.-% of the coating amount within the porous structure of the filter wall. There are ways to measure these values known to those skilled in the art (e.g. by computationally analyzing SEM pictures of cut substrates). It should be mentioned that the inventive catalytic coating can also be established by a so-called powder process. Here the dry filter is contacted on its inlet channels with a gas stream containing an aerosol embracing the composite oxide mentioned above as a dry powder (DE102018111246A1). After application of the suspension or the powder, the wall-flow filter is dried and/or calcined at an increased temperature if deemed necessary by the skilled worker. The catalytic coating of the invention can be applied to the wall-flow filter over its total coatable length or at least over a part of it. That is to say, the length of this catalytic coating can be at least 50% of the coatable length, more preferably at least 60% and most preferably at least 70%.

All ceramic materials customary in the prior art can be used as wall-flow monoliths or wall-flow filters. Porous wall-flow filter substrates made of cordierite, silicon carbide, or aluminum titanate are preferably used. As already mentioned, these wall-flow filter substrates have inlet and outlet channels, wherein the respective downstream ends of the inlet channels and the upstream ends of the outlet channels are offset against each other and closed-off with gastight "plugs." In this case, the exhaust gas that is to be purified and that flows through the filter substrate is forced to pass through the porous wall between the inlet channel and outlet channel, which delivers an excellent particulate filtering effect. The filtration property for particulates can be designed by means of porosity, pore/radii distribution, and thickness of the wall. The porosity of the uncoated wall-flow filters is typically more than 40%, generally from 40% to 75%, particularly from 50% to 70% [as measured according to DIN 66133, latest version on the date of application]. The average pore size of the uncoated filters is at least 7 $\mu$m, for example from 7 $\mu$m to 34 $\mu$m, preferably more than 10 $\mu$m, in particular more preferably from 10 $\mu$m to 25 $\mu$m, or very preferably from 15 $\mu$m to 20 $\mu$m [measured according to DIN 66134, latest version on the date of application].

The catalytic coating of the invention preferably has a loading of 20 g/l to 200 g/l, preferably 30 g/l to 150 g/l. The most suitable amount of loading of a filter coated into the wall depends on its cell density, its wall thickness, and the porosity. In the case of common medium-porous filters (<60% porosity) with, for example, 200 cpsi cell density and 8 mil wall thickness, the preferred loading is 20 g/l to 30 g/l (based on the outer volume of the filter substrate). Highly porous filters (>60% porosity) with, for example, 300 cpsi and 8 mil have a preferred load of 25 g/l to 150 g/l, particularly preferably 50 g/l to 100 g/l (based on the outer volume of the filter substrate). For on-wall coatings a range of 20 g/l to 100g/l, preferably 30 g/l to 80 g/l are regularly used.

According to the present invention the catalytic coating comprises the composite oxide. Besides that, further components can be present in the catalytic coating, like temperature stable high surface area supporting oxides or oxygen storage materials. The latter are readily known to those skilled in the art and depicted below. In addition, the catalytic coating can also comprise further catalytic functionalities. Here, all coatings known to the person skilled in the art for the automotive exhaust-gas sector are suitable for the present invention. The additional functions of the inventive catalytic coating of the filter may preferably be selected from the group consisting of three-way catalyst, SCR catalyst, nitrogen oxide storage catalyst, oxidation catalyst, soot-ignition coating. With regard to the individual catalytic activities coming into consideration and their explanation, reference is made to the respective statements in WO2011151711A1. It should be noted that these additional functionalities mentioned here can also be added to the filter without being part of inventive catalytic coating. As such the filter is preferably coated with at least one or more additional catalytic coatings besides the inventive catalytic coating, e.g. in a zoned or layered format, either into or onto the respective filter walls, either in its inlet or its outlet channels. The skilled worker knows how to achieve this.

The composite oxide of the inventive catalytic coating comprises besides Ce and Pr also other metal oxides. It is preferred if A is selected from the group consisting of Mg, Ca, Sr, Ba, K, Cs, La, Bi, Y, Zn. Most preferred are Ba, K, Bi and Y in this connection. In addition, B can preferably be selected from the group consisting of Sn, Zr, Ti, Fe, Mn, Al, Ga, Bi, Ni, Co, Cu; most preferred is Bi, Sn and Cu in this connection.

The values for x and y in above referenced composite oxide can take numbers from 0 - 1. z in any case has a value that serves for electroneutrality of the composite oxides. In a preferred alternative of the present invention x has a value of from 0,05 - 0,5, most preferred from 0,08 - 0,2. Likewise in a preferred alternative y has a value from 0,05 - 0,5, most preferred from 0,08 - 0,2. In a further preferred alternative the composite oxides have the formular:

$$Pr_2Ce_{2-y}B_yO_z$$

in which y is from 0,05 - 0,5, more preferably 0,08 - 0,2; z is a number that leads to electroneutrality of the composite oxide. B can assume the above mentioned metals.

It has turned out that the composite oxides are active in catalytically combusting soot particles already at rather low temperatures, even without the addition of a further expensive precious metal, in particular platinum group metals (PGM). Although the addition of PGM to the washcoat comprising the composite oxides is possible, it is preferred within this invention to provide for a catalytic coating comprising the above-mentioned composite oxides wherein it does not comprise a precious metal, in particular a PGM. This means that for the combustion of soot the inventive catalytic coating is void of any such metals, in particular PGMs. This is extremely advantageous from the perspective of costs.

The catalytic coating of the invention comprises above mentioned composite oxide. As composite oxides, mention may be made to those having at least partially the structure of a solid solution. In a preferred aspect the composite oxide has a phase pure solid solution structure to at least 50%, more preferred at least 70% and most preferred at least 90%. The crystallographic structure of the composite oxide preferably is a defective fluorite or pyrochlore structure (https://diglib.uibk.ac.at/download/pdf/3593624?name=Complex%20oxide%20thin%20films%20Pyrochlore%20defect %20fluorite%20and%20perovskite%20model%20systems), in which Pr is 8-fold coordinated and Ce is 6-fold coordinated. After calcination, Pr is in a $3^+$ oxidation state, whereas most of the Ce is $Ce^{4+}$. Under operating conditions in oxidation/reduction reactions, cerium sites can be reduced to $Ce^{3+}$, thus generating oxygen vacancies and promoting oxygen mobility, which can enhance soot oxidation activity. Additionally, both elements can be partially substituted by above-mentioned A and/or B metals, respectively. When including metal elements with different ionic radii and lower oxidation states, additional oxygen vacancies can be generated, where crystalline structures can go from disordered defective fluorite phases towards more ordered pyrochlore-type phases. Composition and oxygen mobility optimization lead to improved catalytic activity, specifically under conditions with only air or reduced amounts of nitrogen oxides. On the contrary, both composition and more importantly, synthesis procedure and post-treatment steps can tune catalyst morphology (see below) leading to better catalyst-soot contact, and even after harsh hydrothermal ageing conditions providing higher soot oxidation activity.

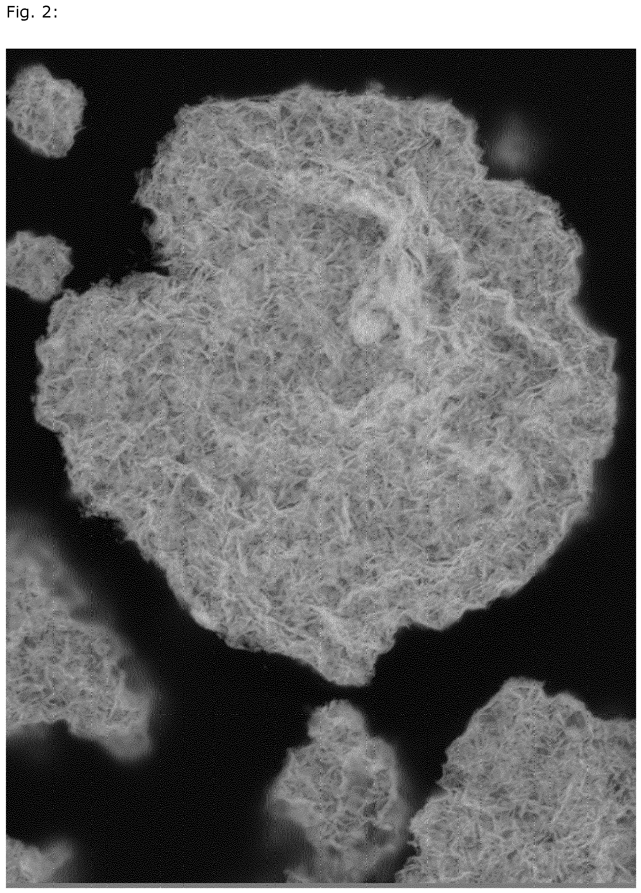

Through special preparational measures (see below) it can be established that on generation the composite oxide has a needle-type morphology having an aspect ratio of 5:1 - 30:1, more preferably 10:1 - 20:1 and most preferably 15:1 - 25:1. The needle like structure serves for an intense contact between the soot particles and the catalytic surface of the composite oxides and, hence, for a better soot combustion. In this sense the composite oxide preferably has a d50 (measured according to DIN 66134, latest version on the date of application; Q3 distribution; https://de.wikipedia.org/w/index.php?title=Partikelgr%C3%B6%C3%9Fenverteilung&oldid=186369602) of 0,5 - 10 $\mu$, more preferred of 0,8 - 8, and most preferred of 1 - 5 $\mu$m (Fig. 2). These needle-type morphologies form spherical secondary structures upon aging. Nevertheless, also aged composite oxides of the invention serve for a decent activity in the combustion of soot.

In a further embodiment the present invention is directed to a process for the production of a catalytic coating of the invention, in which a composite oxide according to the formula:

$$Pr_{2-x}A_xCe_{2-y}B_yO_z$$

in which

A is an alkaline earth metal, an alkaline metal or a transition metal;
B is a transition metal different from A; and
x and y take - independently from each other - values from 0 - 1, wherein x and/or y > 0; and
z has a value that serves for electroneutrality of the composite oxide;

is prepared by a process comprising the following steps:

- co-precipitate a precursor of the composite oxide by adding a base to a solution of ions that can form the precursor by base addition;
- optionally age the precursor at temperatures between 60°C - 160°C;

- optionally separate the precursor from the liquid and wash the precursor at least one time with water;
- spray-dry the resulting precursor to become the composite oxide; and
- incorporate the composite oxide into a suspension for coating a wall-flow filter.

In this sense, all these inventive composite oxides can be conveniently prepared via co-precipitation of e.g. metal nitrates at room temperature, using preferably traditional ammonium hydroxide or NaOH as basic agents. After reaching pH=9-10, samples can preferably be subjected to ageing steps at different temperatures between 60°C - 160°C, more preferably 60°C - 100°C for different times (preferably 2h - 24h, more preferably 10h - 20h) to optimize catalyst textural properties and morphology. Subsequently, precursors optionally are separated and are washed thoroughly with water, and the wet cake is again re-dispersed in water to finally spray-dry it (https://en.wikipe-dia.org/w/index.php?title=Spray_drying)&oldid=1029702004). Although the spray-drying step seems to be preferred to maintain the optimum catalyst morphology and macro-porosity of these materials, alternatively the precursors can be oven-dried and milled to keep similar particle size distributions of the secondary structures. Nevertheless, spray-drying is most advantageous to keep the needle-type primary structures and the mesoporosity of these composite oxides (Fig. 2).

It has to be understood that all preferred and advantageous aspects of the present invention mentioned for the catalytic coating and the comprised composite oxide are *mutatis mutandis* applicable to the process of the materials.

In a third embodiment the present invention is directed to the use of the catalytic coating comprising a composite oxide according to the formula:

$$Pr_{2-x}A_xCe_{2-y}B_yO_z$$

in which

A is an alkaline earth metal, an alkaline metal or a transition metal;
B is a transition metal different from A; and
x and y take - independently from each other - values from 0 - 1, wherein x and/or y > 0; and
z has a value that serves for electroneutrality of the composite oxide, in the inlet channels of soot filters of the wall-flow type for the exhaust treatment of combustion processes. As such the catalytic coating is applied to the exhaust gas inlet channel in a way that it comes into contact with the captured soot and soot combustion is accelerated thereby. In a preferred use, the catalytic coating of the invention is present on and/or in the inlet channel of a wall-flow filter, which is positioned in the exhaust train of a gasoline engine working predominately and on-average with a stoichiometric A/F-ratio. Here the wall-flow filter having the inventive coating in the inlet channels is located preferably in the colder part of the exhaust train which is in the underfloor position of a vehicle.

In a further preferred embodiment of the invention, the wall-flow filter having the inventive coating in the inlet channels is present in an exhaust system, wherein the soot filter is present in the exhaust system comprising at least 2 further three-way-catalysts (TWC) each of them positioned on a separate flow-through substrate. In a more preferred system at least one of the TWCs is located in a close-coupled position in the exhaust train, approximately 20 - 60 cm, more preferred 30 - 50 cm downstream of the engine outlet. Further preferred, the wall-flow filter having the inventive coating in the exhaust gas inlet can reside in the underfloor position of the vehicle followed downstream by a second TWC. Most preferred the wall-flow filter having the inventive coating is positioned within one canning with the downstream TWC.

TWCs have a catalytic coating which eliminate nitrogen oxides and hydrocarbons and carbon monoxide (HC, CO, and $NO_x$) in the stoichiometric exhaust gas ($\lambda$ = 1 conditions). They are usually referred to as TWCs. In addition, they can convert the oxides of the nitrogen under rich exhaust gas conditions and CO and HC under lean conditions. They for the most part include platinum group metals, such as Pt, Pd, and Rh, as catalytically active components, wherein Pd and Rh are particularly preferred. The catalytically active metals are often deposited with high dispersion on large-surface oxides of aluminum, zirconium, and titanium, or mixtures thereof, which may be stabilized by additional transition elements, such as lanthanum, yttrium, praseodymium, etc. Three-way catalysts also include oxygen-storing materials (for example, Ce/Zr mixed oxides; see below). For example, a suitable three-way catalytic coating and corresponding catalysts are described in EP1181970B1, EP1541220B1, WO2008113445A1, WO2008000449A2, WO2019121995A1 WO 2019121994A1 which are referenced here.

The catalytically active TWCs are each located on the walls in the channels of separate through-flow substrates. Ceramic honeycomb bodies that can be used according to the present invention are known through-flow substrates and obtainable on the market. They consist, for example, of silicon carbide, aluminum titanate or cordierite and, for example, have a cell density of 200 to 900 cells per square inch (cpsi) and usually a wall thickness of between 2 and 12 mil, or 0.051 and 0.305 mm.

Oxygen-storing materials have redox properties and can react with oxidizing components, such as oxygen or nitrogen oxides in an oxidizing atmosphere, or with reducing components, such as hydrogen or carbon monoxide, in a reducing atmosphere. The embodiment of the exhaust gas aftertreatment of an internal combustion engine operating essentially in the stoichiometric range is described in e.g. EP1911506A1. Advantageously, an oxygen-storing material consists of a cerium/zirconium mixed oxide. Further oxides, in particular oxides of rare earth metals, may be present. Preferred embodiments according to the invention thus additionally include lanthanum oxide, yttrium oxide, or neodymium oxide. In this regard, reference is also made to the disclosure of US6605264BB and US6468941BA. Other such storage materials and three-way catalysts are described in WO05113126A1, US6387338BA, US7041622BB, EP2042225A1, for example. The TWC-coating usually contains oxygen storage components in amounts of 30 to 225 g/l, based on the volume of the honeycomb body, preferably 40 to 200 g/l and particularly preferably 50 to 160 g/l.

Within the TWCs various catalytic functions may also be combined with one another. The three-way catalysts mentioned above may, for example, be equipped with a nitrogen oxide storage functionality (TWNSC). As stated above, these catalysts consist of materials that, under stoichiometric exhaust gas conditions, impart to the catalyst the function of a three-way catalyst, and that have a function for the storage of nitrogen oxides under lean exhaust-gas conditions. These stored nitrogen oxides are regenerated during brief rich operating phases in order to restore storage capability. The manufacturing of a corresponding TWNSC preferably takes place via the assembly of materials that are used for the construction of a three-way catalyst and a nitrogen oxide storage catalyst. The two functions of the TWNSC that are described here may thereby be present on a carrier, blended with or separate from one another in different layers or zones. A particularly preferred embodiment of such a catalyst is described in WO2010097146A1 or WO2015143191A1, for example.

The precious metals within the TWCs are usually used in amounts of 0.1 g/l to 15 g/l, based on the volume of the ceramic honeycomb body, preferably 0.15 g/l to 10 g/l. In a preferred embodiment, the precious metals are present in equal measure both on the aluminum oxide and on the oxygen storage components. All materials familiar to the person skilled in the art for this purpose may be used as support materials for the precious metals. Such materials are in particular metal oxides with a BET surface area of 30 to 250 $m^2$/g, preferably 100 to 200 $m^2$/g (determined according to DIN 66132 - latest version as of filing date). Particularly suitable support materials for the precious metals are selected from the series consisting of aluminum oxide, doped aluminum oxide, silicon oxide, titanium dioxide and mixed oxides of one or more of these. Doped aluminum oxides are, for example, aluminum oxides doped with lanthanum oxide, barium oxide, zirconium oxide and/or titanium oxide. Lanthanum-stabilized aluminum oxide is advantageously used, wherein lanthanum is used in quantities of 1 to 10% by weight, preferably 3 to 6% by weight, in each case calculated as $La_2O_3$ and based on the weight of the stabilized aluminum oxide. The total loading of the TWC-substrate with the catalytic coating is 40 g/l to 300 g/l, based on the volume of the support, preferably 50 g/l to 260 g/l and particularly preferably 60 g/l to 220 g/l.

The catalytic coating presented in this invention is directed to compositions, which are based on cheap transition metals introduced into the structure $CePrO_x$ to form composite oxides of the formula $Pr_{2-x}A_xCe_{2-y}B_yO_{7-z}$. The introduction of transition metals or alkaline (earth) metals in A or B position of the lattice leads to higher soot oxidation activity ($T_{50}$ values as low as 450°C for soot oxidation under air flow conditions).

These composite oxides are prepared via co-precipitation at room temperature, using a base, like ammonium hydroxide or NaOH as basic agents. Afterwards, samples are preferably subjected to ageing steps, preferably at low temperatures (>60°C) to optimize catalyst textural properties and morphology. Finally, spray-drying of these compositions leads to optimum catalyst morphology for optimal soot-catalyst contact.

These active composite oxides can finally be coated in the form of a low viscous suspension onto and/or into the inlet channels of a wall-flow filter. The latter is located preferably in the underfloor position of a vehicle, after an upstream TWC, where low $NO_x$ concentrations can be expected during continuous driving conditions such as smooth highway driving or rural driving. The catalytic coating can be a dry or wet coating and can be present in the filter inlet both in-wall and/or on-wall of the filter porous walls.

Examples:

Exemplary procedure for composite oxide preparation

$Pr_2Ce_{1.9}Sn_{0.1}O_x$ - The appropriate amount of $Ce(NO_3)_3.6H_2O$, $Pr(NO)_3.6H_2O$ and $SnCl_4.5H_2O$ are dissolved in 500ml of distilled water at room temperature. Synthesis is carried out via precipitation, where $NH_4OH$ is added dropwise into the solution under stirring conditions until pH=9 is reached. Then, the solution gel is aged at 60°C for 16h. Afterwards, the material is filtered and thoroughly washed with distilled water. Wet cake is redissolved in water and spray-dried. Finally, the catalyst is calcined at 800°C for 2h at 10°C/min temperature increase. The final catalyst is subsequently hydrothermally aged at 800°C for 16h in the presence of 10% $H_2O$.

$Pr_2Ce_{1.9}Bi_{0.1}O_{7-z}$ - The appropriate amount of $Ce(NO_3)_3.6H_2O$, $Pr(NO_3)_3.6H_2O$ and $Bi(NO_3)_3.xH_2O$ are dissolved in 500mL of distilled water at room temperature. Synthesis is carried out via precipitation, where $NH_4OH$ is added dropwise into the solution under stirring conditions until pH=9 is reached. Afterwards, the material is filtered and thoroughly washed with distilled water. Wet cake is redissolved in water and spray-dried. Finally, the catalyst is calcined at 800°C for 2h at 10°C/min. The final catalyst is subsequently hydrothermally aged at 800°C for 16h in the presence of 10% $H_2O$.

$Pr_2Ce_{1.9}Cu_{0.1}O_{7-z}$. The appropriate amount of $Ce(NO_3)_3.6H_2O$, $Pr(NO_3)_3.6H_2O$ and $Cu(NO_3)_2.2.5H_2O$ are dissolved in 500mL of distilled water at room temperature. Synthesis is carried out via precipitation, where $NH_4OH$ is added dropwise into the solution under stirring conditions until pH=9 is reached. Afterwards, the material is filtered and thoroughly washed with distilled water. Wet cake is redissolved in water and spray-dried. Finally, the catalyst is calcined at 800°C for 2h at 10°C/min. The final catalyst is subsequently hydrothermally aged at 800°C for 16h in the presence of 10% $H_2O$.

Reference materials

1%Pt/$Al_2O_3$ - Appropriate amount of Pt nitrate solution PNA-type (20%wt) is dissolved in water in order to deposit 1%wt Pt via incipient wetness impregnation on a commercially available $Al_2O_3$ support (ScFa140). The material is dried overnight and calcined at 550°C for 2h at 10°C/min. The catalyst is subsequently hydrothermally aged at 800°C for 16h in the presence of 10% $H_2O$.

$Pr_2Ce_2O_x$ - The appropriate amount of $Ce(NO_3)_3.6H_2O$ and $Pr(NO_3)_3.6H_2O$ are dissolved in 500mL of distilled water at room temperature. Synthesis is carried out via precipitation, where $NH_4OH$ is added dropwise into the solution under stirring conditions until pH=9 is reached. Afterwards, the material is filtered and thoroughly washed with distilled water. Half of the wet cake is redissolved in water and spray-dried. The other half is dried in a static oven at 90°C overnight. Finally, both composite oxides are calcined at 800°C for 2h at 10°C/min. The final composite oxides are subsequently hydrothermally aged at 800°C for 16h in the presence of 10% $H_2O$.

$Pr_2Ce_2O_x$ - The appropriate amount of $Ce(NO_3)_3.6H_2O$ and $Pr(NO_3)_3.6H_2O$ are dissolved in 500mL of distilled water at room temperature. Synthesis is carried out via precipitation, where $NH_4OH$ is added dropwise into the solution under stirring conditions until pH=9 is reached. Then, the solution gel is aged at 60°C for 16h. Afterwards, the material is filtered and thoroughly washed with distilled water. Wet cake is redissolved in water and spray-dried. The composite oxide is calcined at 800°C for 2h at 10°C/min. The final composite oxides are subsequently hydrothermally aged at 800°C for 16h in the presence of 10% $H_2O$.

10%Cu/$Pr_2Ce_2O_x$- The appropriate amount of $Cu(NO_3)_2.2.5H_2O$ is dissolved in water in order to deposit 10%wt Cu via incipient wetness impregnation on $Pr_2Ce_2O_x$. The material is dried overnight and calcined at 800°C for 2h at 10°C/min. The catalyst is subsequently hydrothermally aged at 800°C for 16h in the presence of 10% $H_2O$.

Soot oxidation tests in TGA:

Samples are prepared by soft mechanical mixing (loose conditions) of a commercial carbon soot (Printex U) and each catalyst in a 1:4 mass ratio. TGA tests are performed up to 800°C under air flow (10°C/min) to follow the weight loss of the burnt soot versus the controlled temperature conditions. This mass loss can be directly converted into soot conversion values considering the indicated soot:catalyst ratio (Fig. 1). $T_{50}$ parameter (temperature when 50% soot has been converted/burnt) can be calculated considering initial and final values. Moreover, a blank measurement (without soot) and at least 2 TGA measurements are always carried out to validate these $T_{50}$ values, by confirming sample homogeneity and excluding weight loss effects derived from water or other organic compounds adsorbed on the catalyst surface. Therefore, all $T_{50}$ values expressed in this invention are an average of 2-3 measurements for each sample. Results are shown in the table below.

Results

Soot oxidation activity of composite oxides compared to other PGM-free catalysts after 16H800 ageing conditions

| Composition | Synthesis method | $T_{50}$ (°C) |
|---|---|---|
| 1%Pt/$Al_2O_3$ | Incipient wetness impregnation | 602 |
| $Pr_2Ce_2O_x$ | Co-precipitation + oven drying | 563 |
| $Pr_2Ce_2O_x$ | Co-precipitation + spray drying | 502 |
| $Pr_2Ce_2O_x$ | Co-precipitation + ageing 60°C + spray-drying | 479 |
| $Pr_2Ce_{1.9}Sn_{0.1}O_x$ | Co-precipitation + ageing 60°C+ spray-drying | 464 |

(continued)

| Composition | Synthesis method | $T_{50}$ (°C) |
|---|---|---|
| $Pr_2Ce_{1.9}Bi_{0.1}O_x$ | Co-precipitation+ spray-drying | 474 |
| $Pr_2Ce_{1.9}Cu_{0.1}O_x$ | Co-precipitation+ spray-drying | 450 |
| $10\%Cu/Pr_2Ce_2O_x$ | Co-precipitation + wet impregnation | 578 |

**Claims**

1. Catalytic coating on the inlet channels of a wall-flow filter for the combustion of soot comprising a composite oxide according to the formula:

$$Pr_{2-x}A_xCe_{2-y}B_yO_z$$

in which

A is an alkaline earth metal, an alkaline metal or a transition metal;
B is a transition metal different from A; and
x and y are values from 0 - 1, wherein x and/or y > 0; and
z has a value that serves for electroneutrality of the composite oxide.

2. Catalytic coating according to claim 1,

wherein A is be selected from the group consisting of Mg, Ca, Sr, Ba, K, Cs, La, Bi, Y, Zn; and
B is be selected from the group consisting of Sn, Zr, Ti, Fe, Mn, Al, Ga, Bi, Ni, Co, Cu.

3. Catalytic coating according to claim 1 and/or claim 2,
wherein x has a value from 0,05 - 0,5.

4. Catalytic coating according to one of the preceding claims,
wherein y has a value from 0,05 - 0,5.

5. Catalytic coating according to one of the preceding claims,
wherein it does not comprise a PGM.

6. Catalytic coating according to one of the preceding claims,
wherein the composite oxide has a defective fluorite or pyrochlore structure.

7. Catalytic coating according to one of the preceding claims,
wherein the composite oxide has a needle-type morphology having an aspect ratio of 5:1 - 30:1.

8. Catalytic coating according to one of the preceding claims,
wherein the composite oxide has a d50 of 0,5 - 10 $\mu$.

9. Process for the production of catalytic coating, wherein the composite oxide according to the formula:

$$Pr_{2-x}A_xCe_{2-y}B_yO_z$$

in which

A is an alkaline earth metal, an alkaline metal or a transition metal;
B is a transition metal different from A; and
x and y are values from 0 - 1, wherein x and/or y > 0; and
z has a value that serves for electroneutrality of the composite oxide;

is prepared by a process comprising the following steps in that order:

- co-precipitate a precursor of the composite oxide by adding a base to a solution of ions that can form the precursor by base addition;
- optionally age the precursor at temperatures between 60°C - 160°C;
- optionally separate the precursor from the liquid and wash the precursor at least one time with water;
- spray-dry the resulting precursor to become the composite oxide; and
- incorporate the composite oxide into a suspension for coating a wall-flow filter.

**10.** Use of a catalytic coating according to claims 1 - 8, in the inlet channels of soot filters of the wall-flow type for the exhaust treatment of combustion processes.

**11.** Use according to claim 10,
wherein the soot filter is present in an exhaust system comprising at least 2 further three-way-catalysts each of them positioned on a separate flow-through substrate.

Fig. 1:

Fig. 2:

Europäisches
Patentamt

European
Patent Office

Office européen
des brevets

# EUROPEAN SEARCH REPORT

Application Number

EP 21 20 0470

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | M. VALENCIA ET AL: "Evidences of the Cerium Oxide-Catalysed DPF Regeneration in a Real Diesel Engine Exhaust", TOPICS IN CATALYSIS, vol. 56, no. 1-8, 1 May 2013 (2013-05-01), pages 452-456, XP055250139, NL ISSN: 1022-5528, DOI: 10.1007/s11244-013-9995-3 * Results and Conclusions * | 1-11 | INV. B01J23/10 B01D53/94 B01J37/03 |
| Y | ISHIHARA T ET AL: "Praseodymium oxide doped with Bi for diesel soot oxidation at low temperature", CATALYSIS COMMUNICATIONS, ELSEVIER, AMSTERDAM, NL, vol. 10, no. 13, 25 July 2009 (2009-07-25), pages 1722-1724, XP026282273, ISSN: 1566-7367, DOI: 10.1016/J.CATCOM.2009.05.016 [retrieved on 2009-05-25] * Experimental and Tables 1 to 3 * | 1-11 | |
| A | BUENO-LÓPEZ AGUSTÍN ET AL: "NOx storage and reduction over copper-based catalysts. part 3: Simultaneous NOx and soot removal", APPLIED CATALYSIS B. ENVIRONMENTAL, ELSEVIER, AMSTERDAM, NL, vol. 198, 28 May 2016 (2016-05-28), pages 266-275, XP029666652, ISSN: 0926-3373, DOI: 10.1016/J.APCATB.2016.05.068 * the whole document * | 1-11 | |

TECHNICAL FIELDS SEARCHED (IPC)

B01J
B01D

The present search report has been drawn up for all claims

| Place of search | Date of completion of the search | Examiner |
|---|---|---|
| The Hague | 15 February 2022 | Schoofs, Bart |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1064094 B1
- EP 2521618 B1
- WO 10015573 A2
- EP 1136462 B1
- US 6478874 B1
- US 4609563 A
- WO 9947260 A1
- JP 5378659 B
- EP 2415522 A1
- JP 2014205108 A
- DE 102018111246 A1
- WO 2011151711 A1
- EP 1181970 B1
- EP 1541220 B1
- WO 2008113445 A1
- WO 2008000449 A2
- WO 2019121995 A1
- WO 2019121994 A1
- EP 1911506 A1
- US 6605264 BB
- US 6468941 B
- WO 05113126 A1
- US 6387338 B
- US 7041622 BB
- EP 2042225 A1
- WO 2010097146 A1
- WO 2015143191 A1

**Non-patent literature cited in the description**

- **R. HECK et al.** Catalytic Air Pollution Control. *Commercial Technology,* 1995, 90
- **N. GUILLÉN-HURTADO et al.** *Applied Catalysis A, General,* 2020, vol. 590, 117339